# EUROPEAN PATENT SPECIFICATION

(11) **EP 3 422 361 B1**
(45) Date of publication and mention of the grant of the patent: **24.06.2020**
(21) Application number: 16900435.5
(22) Date of filing: 27.04.2016
(51) Int. Cl.: G21C 13/00, E04H 5/02, F01K 13/00, E04H 9/02

(54) **TURBINE BUILDING AND NUCLEAR POWER PLANT**
TURBINENGEBÄUDE UND KERNKRAFTWERK
BÂTIMENT DE TURBINE ET CENTRALE NUCLÉAIRE

(43) Date of publication of application: 02.01.2019
(73) Proprietor: Mitsubishi Hitachi Power Systems, Ltd., Yokohama-shi, Kanagawa 220-8401 (JP)
(72) Inventor: SHIMOHARA, Yasuaki, Yokohama-shi Kanagawa 220-8401 (JP); IMAJI, Yoshinori, Yokohama-shi Kanagawa 220-8401 (JP); KOJIMA, Toshiki, Yokohama-shi Kanagawa 220-8401 (JP); SHIMIZU, Tomofumi, Yokohama-shi Kanagawa 220-8401 (JP)
(74) Representative: Hoffmann Eitle
(86) International application number: PCT/JP2016/063231
(87) International publication number: WO 2017/187563

(56) References cited:
- JP-A- S6 191 596
- JP-A- S6 375 595
- JP-A- S6 375 595
- JP-A- S6 453 193
- JP-A- S6 453 193
- JP-A- H10 186 077
- JP-A- H11 194 193
- JP-A- H11 264 886
- JP-A- S61 107 191
- JP-A- 2009 098 104
- JP-A- 2013 249 711

## Description

### Field

The present invention relates to a nuclear power plant including a turbine building that houses components such as a steam turbine.

### Background

Key components of nuclear power plants are, for example, a nuclear reactor, a steam generator, a steam turbine, and a generator. Nuclear fuel undergoes fission in the nuclear reactor and heats primary coolant. The hot primary coolant then goes to a steam generator, where heat exchange between the hot primary coolant and secondary coolant takes place to generate steam. The generated steam (secondary coolant) is fed to a steam turbine connected to a generator. The steam drives the steam turbine, which in turn drives the generator to produce electricity.

The nuclear power plants typically include a reactor building and a turbine building adjacent to each other. The reactor building houses a reactor containment vessel enclosing a nuclear reactor and a steam generator, and the turbine building houses components such as a steam turbine. For reactor safety, the reactor building is designed in conformity with seismic design codes and criteria so as not to collapse during an earthquake. The turbine building, on the other hand, is designed in conformity with general building codes and criteria. Such a conventional nuclear power plant is described in, for example, JP H02 128199 A.

JP S63 75595 A relates to a turbine building such as a nuclear power plant, and more particularly, to a turbine building which simplifies a building structure and simplifies design work.

### Summary

### Technical Problem

As discussed above, the conventional nuclear power plant includes a reactor building based on seismic design codes and a turbine building based on general building codes. The nuclear power plant needs to be designed in consideration of the effects of collapse of the turbine building on the reactor building. One option is to design a turbine building conforming to seismic design codes, but designing an earthquake-resistant turbine building increases construction costs, which is unfavorable.

The present invention has been made in view of the foregoing, and it is an object of the present invention to provide a nuclear power plant including a turbine building that provides a higher level of safety without increasing construction costs.

### Solution to Problem

To achieve the above object, a nuclear power plant as defined by the appended independent claim is provided. The dependent claims are directed to optional features and preferred embodiments.
A nuclear power plant of the present invention comprises a turbine building and a reactor building that houses a nuclear reactor, wherein the turbine building includes a turbine accommodation unit that houses a steam turbine; and a high earthquake-resistant unit adjacent to the turbine accommodation unit, the high earthquake-resistant unit being designed to have a higher level of earthquake resistance than the turbine accommodation unit. The turbine accommodation unit and the high earthquake-resistant unit have inner spaces that communicate with each other, and each of the turbine accommodation unit and the high earthquake-resistant unit has an independent structure. The high earthquake-resistant unit is spaced apart from the reactor building by a certain distance. The high earthquake-resistant unit houses a deaerator and a high-pressure feedwater heater.

Since the inner spaces of the turbine accommodation unit and the high earthquake-resistant unit communicate with each other, workers can move between the turbine accommodation unit and the high earthquake-resistant unit easily. Since each of the turbine accommodation unit and the high earthquake-resistant unit has the independent structure, the high earthquake-resistant unit withstands an earthquake if the turbine accommodation unit collapses during the earthquake and the collapse of the turbine accommodation unit has almost no effect on the high earthquake-resistant unit. This means that the collapse of the turbine accommodation unit has no effect on a building adjacent to the high earthquake-resistant unit, thereby achieving a higher level of safety without increasing construction costs.

In the nuclear power plant of the present invention, the turbine accommodation unit and the high earthquake-resistant unit are built on respective independent foundations.

Since the turbine accommodation unit and the high earthquake-resistant unit are built on the respective independent foundations, this structure delivers the effect of an earthquake separately to the turbine accommodation unit and the high earthquake-resistant unit. With this structure, the high earthquake-resistant unit can withstand the earthquake if the turbine accommodation unit collapses, and the collapse of the turbine accommodation unit has almost no effect on the high earthquake-resistant unit.

In the nuclear power plant of the present invention, the foundation of the turbine accommodation unit is in contact with the foundation of the high earthquake-resistant unit, wherein the turbine accommodation unit and the high earthquake-resistant unit are spaced apart with a gap between the structures of the turbine accommodation unit and the high earthquake-resistant unit.

Since the structures of the turbine accommodation unit and the high earthquake-resistant unit are spaced apart with the gap, vibrations of the turbine accommodation unit during an earthquake are not transmitted to the high earthquake-resistant unit, thereby preventing collapsing of the high earthquake-resistant unit.

In the nuclear power plant of the present invention, a buffer member is disposed in the gap between the structures of the turbine accommodation unit and the high earthquake-resistant unit.

Since the buffer member is disposed in the gap between the structures of the turbine accommodation unit and the high earthquake-resistant unit, the buffer member can prevent vibrations from being transmitted between the turbine accommodation unit and the high earthquake-resistant unit. Moreover, the buffer member bridges the gap between the turbine accommodation unit and the high earthquake-resistant unit. This allows the workers to move between the inner spaces of the turbine accommodation unit and the high earthquake-resistant unit and facilitates their maintenance work.

In the nuclear power plant of the present invention, the buffer member is interposed between a floor of the turbine accommodation unit and a floor of the high earthquake-resistant unit to contiguously connect the floors.

In the nuclear power plant of the present invention, the gap between the structures of the turbine accommodation unit and the high earthquake-resistant unit is covered with a cover.

Since the gap between the structures of the turbine accommodation unit and the high earthquake-resistant unit is covered with a cover, the cover prevents, for example, rain from entering the inner spaces of the turbine accommodation unit and the high earthquake-resistant unit. This configuration allows the workers to move between the inner spaces of the turbine accommodation unit and the high earthquake-resistant unit, thereby making use of the structural gap.

In an example, in the nuclear power plant, at least one of a pillar, a wall, a floor, and a beam of the high earthquake-resistant unit is thicker than a corresponding one or ones of a pillar, a wall, a floor, and a beam of the turbine accommodation unit.

Since at least one of the pillar, wall, floor, and beam of the high earthquake-resistant unit is thicker than the corresponding one or ones of the pillar, wall, floor, and beam of the turbine accommodation unit, the high earthquake-resistant unit can easily enhance its seismic resistance.

In the nuclear power plant of the present invention, the high earthquake-resistant unit has a height lower than a height of the turbine accommodation unit.

Since the high earthquake-resistant unit is lower than the turbine accommodation unit, this can prevent increase in construction costs of the high earthquake-resistant unit.

In the nuclear power plant of the present invention, the high earthquake-resistant unit houses an associated component for the steam turbine.

Since the high earthquake-resistant unit houses associated components for the steam turbine, this makes use of the inner space of the high earthquake-resistant unit and reduces the number of components disposed in the turbine accommodation unit, which in turn reduces the size of the turbine accommodation unit.

In the nuclear power plant of the present invention, the associated component is disposed along a horizontal direction crossing a direction of a side-by-side arrangement of the turbine accommodation unit and the high earthquake-resistant unit.

Since the associated components are disposed along a horizontal direction crossing the direction of the side-by-side arrangement of the turbine accommodation unit and the high earthquake-resistant unit, the thickness of the high earthquake-resistant unit in the horizontal direction can be reduced, which in turn reduces the size of the high earthquake-resistant unit.

In the nuclear power plant of the present invention, associated components are disposed on floors at several stories of the high earthquake-resistant unit.

In the nuclear power plant of the present invention, the deaerator and the high-pressure feedwater heater are vertically disposed in the high earthquake-resistant unit.

Since the inner spaces of the turbine accommodation unit and the high earthquake-resistant unit communicate with each other, workers can move between the turbine accommodation unit and the high earthquake-resistant unit easily. Since each of the turbine accommodation unit and the high earthquake-resistant unit has an independent structure, the high earthquake-resistant unit withstands an earthquake if the turbine accommodation unit collapses during the earthquake and the collapse of the turbine accommodation unit has almost no effect on the high earthquake-resistant unit. This means that the collapse of the turbine accommodation unit has no effect on the reactor building adjacent to the high earthquake-resistant unit, thereby achieving a higher level of safety without increasing construction costs.

### Advantageous Effects of Invention

The nuclear power plant according to the present invention includes the turbine accommodation unit and the high earthquake-resistant unit having respective inner spaces that communicate with each other. Each of the turbine accommodation unit and the high earthquake-resistant unit has an independent structure. This configuration can provide a higher level of safety without increasing construction costs.

### Brief Description of Drawings

FIG. 1 is a schematic diagram illustrating a general configuration of a nuclear power plant according to an embodiment.
FIG. 2 is a schematic diagram illustrating a relation between a reactor building and a turbine building.
FIG. 3 is a sectional view of FIG. 2 taken along line III-III.
FIG. 4 is a sectional view of FIG. 2 taken along line IV-IV.
FIG. 5 is a sectional view of FIG. 2 taken along line V-V.
FIG. 6 is a sectional view of a floor connecting portion of the turbine building.
FIG. 7 is a sectional view of a wall connecting portion of the turbine building.

### Description of Embodiments

The following describes a preferred embodiment of a nuclear power plant according to the present invention with reference to the accompanying drawings. The embodiment is not intended to limit the scope of the present invention. If several embodiments are described, the embodiments may be combined as appropriate, and the combined embodiments are indeed included in the scope of the present invention.

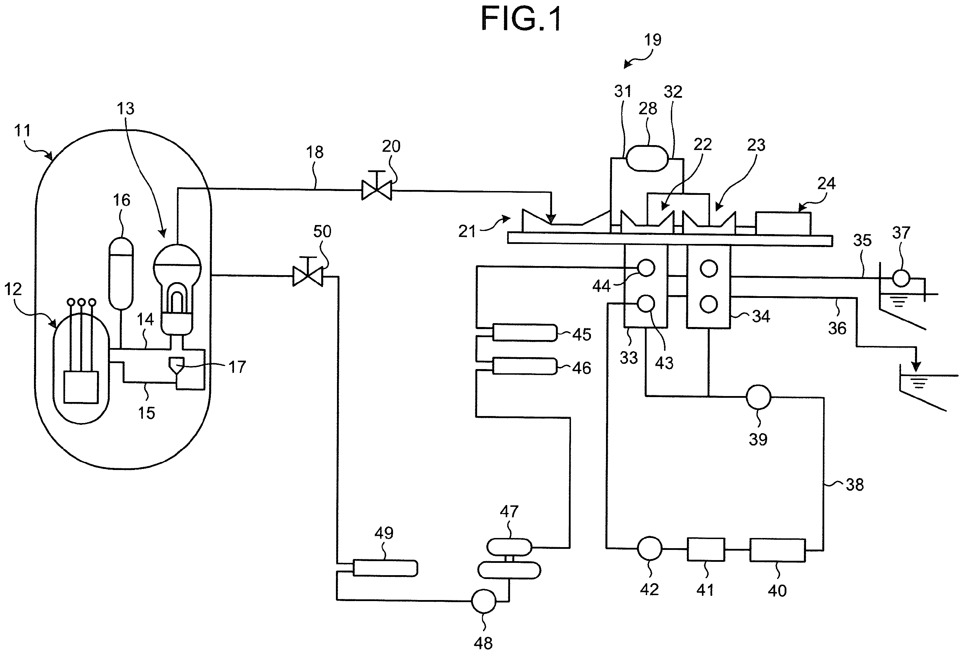

FIG. 1 is a schematic diagram illustrating a general configuration of a nuclear power plant according to the embodiment.

The nuclear reactor according to the present embodiment is a pressurized water reactor (PWR) that uses light water as both reactor coolant and neutron moderator. In the PWR, the light water is heated to be hot, highly pressurized water, not boiling in the entire reactor core. The hot, highly pressurized water then flows to a steam generator at which heat exchange takes place to generate steam. The generated steam is fed to a turbine generator that produces electricity. The nuclear reactor may be a boiling water reactor (BWR).

As illustrated in FIG. 1, a reactor containment vessel 11 in included the nuclear power plant according to the present embodiment encloses a nuclear reactor (PWR) 12 and a steam generator 13. The nuclear reactor 12 and the steam generator 13 are connected via pipes 14 and 15. The pipe 14 is provided with a pressurizer 16 and the pipe 15 is provided with a primary coolant pump 17. In this case, light water is used as moderator and primary coolant. To prevent boiling of the primary coolant at the reactor core, the primary cooling system is highly pressurized by the pressurizer 16. The light water is heated by thermal energy released by fission of fuel (nuclear fuel) at the nuclear reactor 12. The hot primary coolant is fed to the steam generator 13 through the pipe 14 with the hot primary coolant maintained at a certain high pressure by the pressurizer 16. At the steam generator 13, heat is transferred from the hot, highly pressurized primary coolant to secondary coolant. The primary coolant is cooled and the cooled primary coolant is pumped back to the nuclear reactor (PWR) 12 through the pipe 15.

The steam generator 13 is connected to a steam turbine 19 via a pipe 18. The pipe 18 is provided with a main steam separation valve 20. The steam turbine 19 includes a high-pressure turbine 21 and two low-pressure turbines 22 and 23 to which a generator 24 is coaxially connected. A moisture separator heater 28 is disposed between the high-pressure turbine 21 and the low-pressure turbines 22 and 23. In other words, the steam generator 13 is connected to an entrance portion of the high-pressure turbine 21 via the pipe 18, an exit portion of the high-pressure turbine 21 is connected to an entrance portion of the moisture separator heater 28 via a steam pipe 31, and an exit portion of the moisture separator heater 28 is connected to respective entrance portions of the low-pressure turbines 22 and 23 via a steam pipe 32.

The steam turbine 19 includes condensers 33 and 34 disposed below the low-pressure turbines 22 and 23. The condensers 33 and 34 cool down the remaining steam from the low-pressure turbines 22 and 23 by using cooling water and condense the steam to collect condensed water. The condensers 33 and 34 use seawater as the cooling water. To supply and drain cooling water, the condensers 33 and 34 are connected to an end of an intake pipe 35 and an end of a drainpipe 36. The intake pipe 35 is provided with a circulating water pump 37. The other ends of the intake pipe 35 and the drainpipe 36 are disposed in the sea.

The condensers 33 and 34 are connected with another pipe 38 to which a condensate pump 39, a gland condenser 40, a condensate demineralizer 41, a condensate booster pump 42, and low-pressure feedwater heaters 43, 44, 45, and 46 are provided in this order along the direction of the condensate flow. The first low-pressure feedwater heater 43 and the second low-pressure feedwater heater 44 are located in the condensers 33 and 34 at which condensed water is heated by the remaining steam from the low-pressure turbines 22 and 23. The third low-pressure feedwater heater 45 and the fourth low-pressure feedwater heater 46 are located outside the condensers 33 and 34. The third and fourth low-pressure feedwater heaters 45 and 46 heat the condensed water by using steam extracted from the low-pressure turbines 22 and 23.

The pipe 38 is also provided with a deaerator 47, a main feedwater pump 48, a high-pressure feedwater heater 49, and a main feedwater control valve 50 in this order at the downstream side of the fourth low-pressure feedwater heater 46 along the direction of the condensate flow.

Heat of the hot, highly pressurized primary coolant is transferred to generate steam at the steam generator 13 and the generated steam flows through the pipe 18 to the steam turbine 19, at which the steam rotates the high-pressure turbine 21 and the low-pressure turbines 22 and 23, generating rotational force that drives the generator 24 to produce electricity. The steam from the steam generator 13 drives the high-pressure turbine 21 and then enters the moisture separator heater 28 that eliminates moisture contained in the steam and reheats the steam. The reheated steam then drives the low-pressure turbines 22 and 23. After driving the low-pressure turbines 22 and 23, the remaining steam is cooled and condensed by the condensers 33 and 34 with seawater. The condensed water is pumped through the pipe 38 by the condensate pump 39 to the gland condenser 40, the condensate demineralizer 41, the low-pressure feedwater heaters 43, 44, 45, and 46, the deaerator 47, and the high-pressure feedwater heater 49 and returned to the steam generator 13.

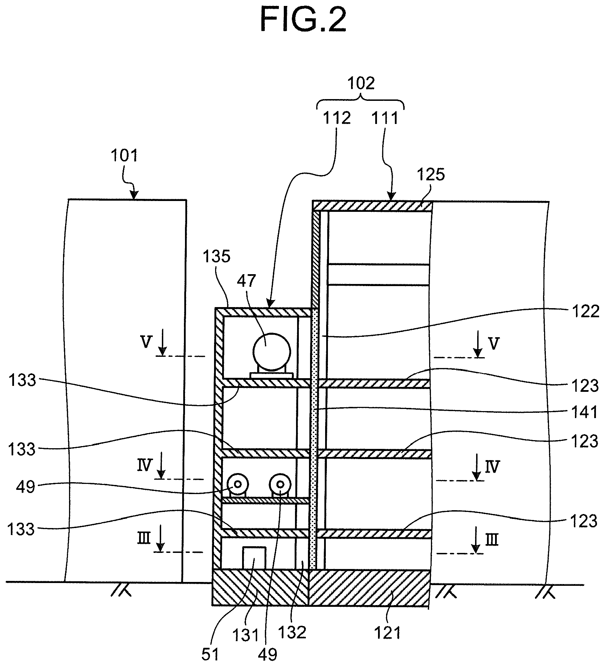

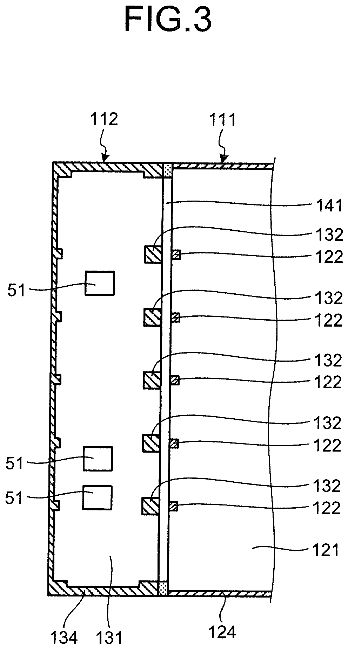

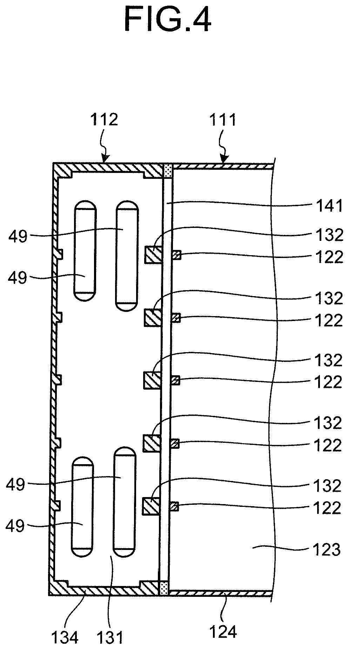

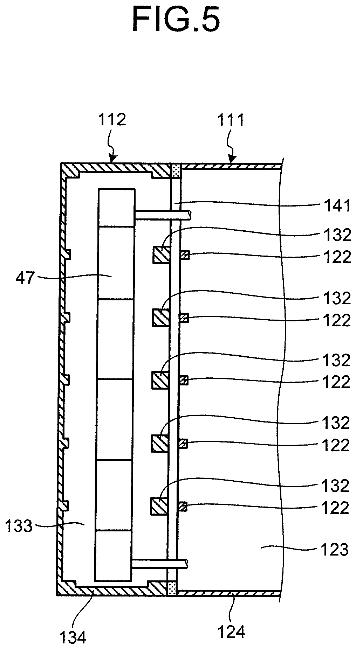

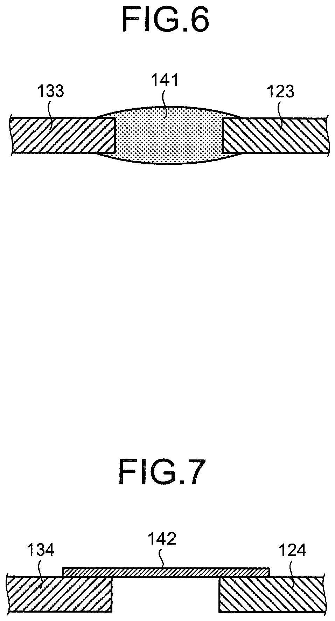

Components of the nuclear power plant discussed above are disposed inside buildings. FIG. 2 is a schematic diagram illustrating a relation between a reactor building and a turbine building, FIG. 3 is a sectional view of FIG. 2 taken along line III-III, FIG. 4 is a sectional view of FIG. 2 taken along line IV-IV, FIG. 5 is a sectional view of FIG. 2 taken along line V-V, FIG. 6 is a sectional view of a floor connecting portion of the turbine building, and FIG. 7 is a sectional view of a wall connecting portion of the turbine building.

As illustrated in FIGS. 2 to 5, the nuclear power plant includes a reactor building 101 and a turbine building 102 that are built apart from each other with a certain space therebetween. The reactor building 101 is an earthquake-resistant building designed in conformity with seismic design codes and criteria, whereas the turbine building 102 is a building designed in conformity with general building codes and criteria and is not an earthquake-resistant building. The reactor building 101 houses the reactor containment vessel 11 (see FIG. 1) enclosing components such as the nuclear reactor 12, the steam generator 13, the pressurizer 16, and the primary coolant pump 17.

The turbine building 102 includes a turbine accommodation unit 111 and an high earthquake-resistant unit 112. The turbine accommodation unit 111 houses the steam turbine 19 (high-pressure turbine 21 and low-pressure turbines 22 and 23), the generator 24, the moisture separator heater 28, the condensers 33 and 34, the condensate pump 39, the gland condenser 40, the condensate demineralizer 41, the condensate booster pump 42, the low-pressure feedwater heaters 43, 44, 45, and 46, and the main feedwater pump 48. The high earthquake-resistant unit 112 houses the deaerator 47 and the high-pressure feedwater heater 49 that are associated components for the steam turbine 19.

The turbine building 102 has a steel framed structure conforming to general building codes, and includes a foundation 121, a plurality of pillars 122 standing on the foundation 121, a plurality of floors 123, a plurality of walls 124, and a ceiling 125. The high earthquake-resistant unit 112 is a reinforced concrete structure conforming to seismic design codes, and includes a foundation 131, a plurality of pillars 132 standing on the foundation 131, a plurality of floors 133, a plurality of walls 134, and a ceiling 135. In this case, the high earthquake-resistant unit 112 is designed not to collapse under an earthquake ground motion on which the seismic provision for the reactor building 101 is based. The turbine accommodation unit 111 is designed to withstand a lower-magnitude earthquake than the high earthquake-resistant unit 112, that is, designed in conformity with a lower level of earthquake resistance criteria than the high earthquake-resistant unit 112.

The turbine accommodation unit 111 and the high earthquake-resistant unit 112 have inner spaces that communicate with each other. Each of the turbine accommodation unit 111 and the high earthquake-resistant unit 112 has an independent structure. In other words, the turbine accommodation unit 111 and the high earthquake-resistant unit 112 are respectively built on independent foundations 121 and 131. The high earthquake-resistant unit 112 is designed to have a higher level of earthquake resistance than the turbine accommodation unit 111.

The high earthquake-resistant unit 112 has the pillars 132, the floors 133, the walls 134, the ceiling 135, and the beams (not illustrated) that are thicker than the pillars 122, the floors 123, the walls 124, the ceiling 125, and the beams (not illustrated) of the turbine accommodation unit 111. The high earthquake-resistant unit 112 is lower than the turbine accommodation unit 111 by one-story level.

The reactor building 101 and the high earthquake-resistant unit 112 of the turbine building 102 are spaced apart by a certain distance. The turbine accommodation unit 111 and the high earthquake-resistant unit 112 are built adjacent to each other. In other words, although the foundation 121 of the turbine accommodation unit 111 is in contact with the foundation 131 of the high earthquake-resistant unit 112, the pillars 122 and 132, the floors 123 and 133, and the walls 124 and 134, which constitute the corresponding structure, are spaced apart from each other with certain gaps therebetween. Buffer members 141 are disposed in the gaps between the pillars 122 and 132, the floors 123 and 133, and the walls 124 and 134.

As illustrated in FIG. 6, for example, a buffer member 141 is interposed between an end portion of a floor 123 of the turbine accommodation unit 111 and an end portion of a floor 133 of the high earthquake-resistant unit 112 to contiguously connect the floors 123 and 133. As illustrated in FIG. 7, a cover member 142 is secured on the wall 124 of the turbine accommodation unit 111 and the wall 134 of the high earthquake-resistant unit 112 to cover the gap between an end portion of the wall 124 and an end portion of the wall 134, and the external surfaces of the walls 124 and 134 are contiguously connected.

In the high earthquake-resistant unit 112 as illustrated in FIGS. 2 to 5, a plurality of pumps 51 are disposed on the first floor 133, a plurality of high-pressure feedwater heaters 49 are disposed on the second floor 133, and the deaerator 47 is disposed on the third floor 133. In this case, the deaerator 47 and the high-pressure feedwater heaters 49 are disposed along a horizontal direction, which corresponds to an up-and-down direction in FIGS. 4 and 4, crossing a direction of the side-by-side arrangement of the turbine accommodation unit 111 and the high earthquake-resistant unit 112. The direction of the side-by-side arrangement corresponds to a left-and-right direction in FIGS. 1 to 4. The deaerator 47 and the high-pressure feedwater heaters 49 are connected to the steam turbine 19 housed in the turbine accommodation unit 111 via pipes.

In the nuclear power plant, the reactor building 101 and the turbine building 102 are built adjacent to each other and the high earthquake-resistant unit 112 is disposed between the reactor building 101 and the turbine accommodation unit 111 and is apart from the reactor building 101 with a certain space. Each of the turbine accommodation unit 111 and the high earthquake-resistant unit 112 has an independent structure but their inner spaces communicate with each other. This structure allows workers to move between the turbine accommodation unit 111 and the high earthquake-resistant unit 112 and facilitates maintenance work for the components.

The turbine accommodation unit 111 and the high earthquake-resistant unit 112 have the respective independent structures that differ in the foundations 121 and 131. With these structures, the turbine accommodation unit 111 and the high earthquake-resistant unit 112 vibrates independently in the event of an earthquake. Although the turbine accommodation unit 111 and the high earthquake-resistant unit 112 are connected by the buffer members 141, the pillars 122 and 132, floors 123 and 133, and walls 124 and 134 are not directly connected with each other. This configuration can prevent vibrations of one side from being transmitted to the other side. If a major earthquake occurs and the turbine accommodation unit 111 collapses, the high earthquake-resistant unit 112, which is designed in conformity with seismic design codes, withstands the earthquake. In addition, the collapse of the turbine accommodation unit 111 has almost no effect on the high earthquake-resistant unit 112.

If the turbine accommodation unit 111 collapses, the effect of the collapse is blocked by the high earthquake-resistant unit 112 and is not transmitted to the reactor building 101 standing adjacent to the high earthquake-resistant unit 112. The distance between the reactor building 101 and the high earthquake-resistant unit 112 and the height of the high earthquake-resistant unit 112 are set such that they can prevent debris from the destruction of the turbine accommodation unit 111 from reaching the reactor building 101 if the turbine accommodation unit 111 collapses toward the high earthquake-resistant unit 112. This configuration can provide a higher level of safety for the reactor building 101.

The turbine building according to the present embodiment includes the turbine accommodation unit 111 that houses components such as the steam turbine 19, and the high earthquake-resistant unit 112 built adjacent to the turbine accommodation unit 111 and designed to have a higher level of earthquake resistance than the turbine accommodation unit 111. The turbine accommodation unit 111 and the high earthquake-resistant unit 112 have inner spaces that communicate with each other and each have an independent structure.

Since the inner spaces of the turbine accommodation unit 111 and the high earthquake-resistant unit 112 communicate with each other, workers can move between the turbine accommodation unit 111 and the high earthquake-resistant unit 112 easily during normal operation of the steam turbine 19, which facilitates their operations and maintenance work. Since each of the turbine accommodation unit 111 and the high earthquake-resistant unit 112 has an independent structure, the high earthquake-resistant unit 112 withstands an earthquake if the turbine accommodation unit 111 collapses during the earthquake, and the collapse of the turbine accommodation unit 111 has almost no effect on the high earthquake-resistant unit 112. This means that the collapse of the turbine accommodation unit 111 has no effect on the reactor building 101 standing adjacent to the high earthquake-resistant unit 112. This configuration can provide a higher level of safety without increasing construction costs.

The turbine accommodation unit 111 and the high earthquake-resistant unit 112 of the turbine building according to the present embodiment are built on the respective independent foundations 121 and 131. If an earthquake occurs, this structure delivers the effect of the earthquake separately to the turbine accommodation unit 111 and the high earthquake-resistant unit 112. If the turbine accommodation unit 111 collapses, the high earthquake-resistant unit 112 receives almost no effect from the collapse, which can prevent collapse of the high earthquake-resistant unit 112.

The turbine accommodation unit 11 and the high earthquake-resistant unit 112 of the turbine building according to the present embodiment are spaced apart with a gap between their structures. If an earthquake occurs, this gap prevents vibrations of the turbine accommodation unit 111 from being transmitted to the high earthquake-resistant unit 112, which can prevent collapse of the high earthquake-resistant unit 112.

The gap between the structures of the turbine accommodation unit 111 and the high earthquake-resistant unit 12 of the turbine building according to the present embodiment is provided with the buffer member 141. The buffer member 141 can prevent vibrations from being transmitted between the turbine accommodation unit 111 and the high earthquake-resistant unit 112. The buffer member 141 bridges the gap between the turbine accommodation unit 111 and the high earthquake-resistant unit 112. This structure allows workers to move between the inner spaces of the turbine accommodation unit 111 and the high earthquake-resistant unit 112 and facilitates their maintenance work.

The gap between the structures of the turbine accommodation unit 111 and the high earthquake-resistant unit 112 of the turbine building according to the present embodiment is covered with the cover member 142. The cover member 142 can prevent, for example, rain from entering the inner spaces of the turbine accommodation unit 111 and the high earthquake-resistant unit 112 and allow workers to move between the inner spaces of the turbine accommodation unit 11 and the high earthquake-resistant unit 112. This configuration can make use of the structural gap.

The high earthquake-resistant unit 112 of the turbine building according to the present embodiment has at least one of the pillar 132, the wall 134, the floor 133, and the beam thicker than the corresponding one or ones of the pillar 122, the wall 124, the floor 123, and the beam of the turbine accommodation unit 111. This configuration can easily enhance the seismic resistance of the high earthquake-resistant unit 112.

The high earthquake-resistant unit 112 of the turbine building according to the present embodiment is lower than the turbine accommodation unit 111. Since the high earthquake-resistant unit 112 is spaced apart from the reactor building 101, the high earthquake-resistant unit 112 can prevent parts from the collapsing turbine accommodation unit 111 from falling toward the reactor building 101. The high earthquake-resistant unit 112 lower than the high earthquake-resistant unit 112 can carry out this function, thereby preventing increase in construction costs of the high earthquake-resistant unit. The high earthquake-resistant unit 112 can be lower than the turbine accommodation unit 111 to the extent to which the high earthquake-resistant unit 112 prevents parts from the collapsing turbine accommodation unit 111 from falling toward the reactor building 101.

The high earthquake-resistant unit 112 of the turbine building according to the present embodiment houses associated components for the steam turbine 19. This configuration can make efficient use of the inner space of the high earthquake-resistant unit 112, leading to a smaller number of components housed in the turbine accommodation unit 111, which can reduce the size of the turbine accommodation unit 111.

In the turbine building according to the present embodiment, the associated components are disposed along a horizontal direction crossing a direction of the side-by-side arrangement of the turbine accommodation unit 111 and the high earthquake-resistant unit 112. This layout can reduce the thickness of the high earthquake-resistant unit 112 in the horizontal direction, thereby reducing the size of the high earthquake-resistant unit 112.

The associated components for the steam turbine 19 are disposed on the floors 133 at several stories of the high earthquake-resistant unit 112. Since the associated components for the steam turbine 19 are vertically disposed in the high earthquake-resistant unit 112, this positional relation can reduce the size of the high earthquake-resistant unit 112. Disposing the associated components for the steam turbine 19 such as the deaerator 47 and the high-pressure feedwater heaters 49 inside the high earthquake-resistant unit 112 can reduce the length of the steam pipes connecting the steam generator 13 and the associated components for the steam turbine 19, leading to a smaller steam loss.

The nuclear power plant according to the present embodiment includes the reactor building 101 that houses components such as the nuclear reactor 12 and the steam generator 13, and the turbine accommodation unit 111 that houses components such as the steam turbine 19. The reactor building 101 and the high earthquake-resistant unit 112 of the turbine building 102 are built apart from each other with a certain space therebetween.

Since the inner spaces of the turbine accommodation unit 111 and the high earthquake-resistant unit 112 communicate with each other, workers can move between the turbine accommodation unit 111 and the high earthquake-resistant unit 112 easily during normal operation of the steam turbine 19, which facilitates their operations and maintenance work. Since each of the turbine accommodation unit 111 and the high earthquake-resistant unit 112 is an independent structure, the high earthquake-resistant unit 112 withstands an earthquake if the turbine accommodation unit 111 collapses during the earthquake and the collapse of the turbine accommodation unit 111 has almost no effect on the high earthquake-resistant unit 112. This means that the collapse of the turbine accommodation unit 111 has no effect on the reactor building 101 adjacent to the high earthquake-resistant unit 112. This configuration can prevent collapse of the reactor building 101 and thus provide a higher level of safety without increasing construction costs.

### Reference Signs List

11 Reactor containment vessel
12 Nuclear reactor
13 Steam generator
19 Steam turbine
28 Moisture separator heater
47 Deaerator (associated component)
49 High-pressure feedwater heater (associated component)
101 Reactor building
102 Turbine building
111 Turbine accommodation unit
112 High earthquake-resistant unit
121, 131 Foundation
122, 132 Pillar
123, 133 Floor
124, 134 Wall
125, 135 Ceiling
141 Buffer member
142 Cover member

## Claims

1. A nuclear power plant comprising a turbine building and a reactor building (101) that houses a nuclear reactor, the turbine building comprising:
a turbine accommodation unit (111) that houses a steam turbine (119); and
a high earthquake-resistant unit (112)adjacent to the turbine accommodation unit (111), the high earthquake-resistant unit (112) being designed to have a higher level of earthquake resistance than the turbine accommodation unit (111), wherein
the turbine accommodation unit (111) and the high earthquake-resistant unit (112) have inner spaces that communicate with each other, each of the turbine accommodation unit (111) and the high earthquake-resistant unit (112) having an independent structure, and
the high earthquake-resistant unit (112) is spaced apart from the reactor building (101) by a certain distance, **characterized in that**
the high earthquake-resistant unit (112) houses a deaerator (47) and a high-pressure feedwater heater (49).

2. The nuclear power plant according to claim 1, wherein the turbine accommodation unit (111) and the high earthquake-resistant unit (112) are built on respective independent foundations (121, 131).

3. The nuclear power plant according to claim 2, wherein the foundation (121) of the turbine accommodation unit (111) is in contact with the foundation (131) of the high earthquake-resistant unit (112), wherein the turbine accommodation unit (111) and the high earthquake-resistant unit (112) are spaced apart with a gap between the structures of the turbine accommodation unit (111) and the high earthquake-resistant unit (112).

4. The nuclear power plant according to claim 3, wherein a buffer member (141) is disposed in the gap between the structures of the turbine accommodation unit (111) and the high earthquake-resistant unit (112).

5. The nuclear power plant according to claim 4, wherein the buffer member (141) is interposed between a floor (123) of the turbine accommodation unit (111) and a floor (133) of the high earthquake-resistant unit (112) to contiguously connect the floors.

6. The nuclear power plant according to claim 3, wherein the gap between the structures of the turbine accommodation unit (111) and the high earthquake-resistant unit (112) is covered with a cover (142).

7. The nuclear power plant according to any one of claims 1 to 6, wherein the high earthquake-resistant unit (112) has a height lower than a height of the turbine accommodation unit.

8. The nuclear power plant according to any one of claims 1 to 7, wherein the high earthquake-resistant unit (112) houses an associated component (47; 49) for the steam turbine (19).

9. The nuclear power plant according to claim 8, wherein the associated component (47; 49) is disposed along a horizontal direction crossing a direction of a side-by-side arrangement of the turbine accommodation unit (111) and the high earthquake-resistant unit (112).

10. The nuclear power plant according to claim 9, wherein associated components (47, 49) are disposed on floors (123) at several stories of the high earthquake-resistant unit (112) .

11. The nuclear power plant according to claim 10, wherein the deaerator (47) and the high-pressure feedwater heater (49) are vertically disposed in the high earthquake-resistant unit (112).

## Patentansprüche

1. Kernkraftwerk, umfassend ein Turbinengebäude und ein Reaktorgebäude (101), das einen Kernreaktor beherbergt, wobei das Turbinengebäude umfasst:
eine Turbinenunterbringungseinheit (111), die eine Dampfturbine (119) beherbergt; und
eine hoch erdbebensichere Einheit (112), die an die Turbinenunterbringungseinheit (111) angrenzt, wobei die hoch erdbebensichere Einheit (112) so ausgelegt ist, dass sie einen höheren Grad an Erdbebensicherheit als die Turbinenunterbringungseinheit (111) aufweist, wobei
die Turbinenunterbringungseinheit (111) und die hoch erdbebensichere Einheit (112) innere Räume aufweisen, die miteinander kommunizieren, wobei jede der Turbinenunterbringungseinheit (111) und der hoch erdbebensicheren Einheit (112) eine unabhängige Struktur aufweist, und
die hoch erdbebensichere Einheit (112) vom Reaktorgebäude (101) um eine bestimmte Entfernung beabstandet ist,
**dadurch gekennzeichnet, dass**
die hoch erdbebensichere Einheit (112) einen Entgaser (47) und einen Hochdruck-Speisewassererhitzer (49) beherbergt.

2. Kernkraftwerk nach Anspruch 1, wobei die Turbinenunterbringungseinheit (111) und die hoch erdbebensichere Einheit (112) auf jeweiligen unabhängigen Fundamenten (121, 131) gebaut sind.

3. Kernkraftwerk nach Anspruch 2, wobei das Fundament (121) der Turbinenunterbringungseinheit (111) mit dem Fundament (131) der hoch erdbebensicheren Einheit (112) in Kontakt steht, wobei die Turbinenunterbringungseinheit (111) und die hoch erdbebensichere Einheit (112) mit einem Spalt zwischen den Strukturen der Turbinenunterbringungseinheit (111) und der hoch erdbebensicheren Einheit (112) beabstandet sind.

4. Kernkraftwerk nach Anspruch 3, wobei ein Pufferelement (141) in dem Spalt zwischen den Strukturen der Turbinenunterbringungseinheit (111) und der hoch erdbebensicheren Einheit (112) angeordnet ist.

5. Kernkraftwerk nach Anspruch 4, wobei das Pufferelement (141) zwischen einem Boden (123) der Turbinenunterbringungseinheit (111) und einem Boden (133) der hoch erdbebensicheren Einheit (112) angeordnet ist, um die Böden durchgehend zu verbinden.

6. Kernkraftwerk nach Anspruch 3, wobei der Spalt zwischen den Strukturen der Turbinenunterbringungseinheit (111) und der hoch erdbebensicheren Einheit (112) mit einer Abdeckung (142) abgedeckt ist.

7. Kernkraftwerk nach einem der Ansprüche 1 bis 6, wobei die hoch erdbebensichere Einheit (112) eine geringere Höhe als eine Höhe der Turbinenunterbringungseinheit aufweist.

8. Kernkraftwerk nach einem der Ansprüche 1 bis 7, wobei die hoch erdbebensichere Einheit (112) eine zugehörige Komponente (47; 49) für die Dampfturbine (19) beherbergt.

9. Kernkraftwerk nach Anspruch 8, wobei die zugehörige Komponente (47; 49) entlang einer horizontalen Richtung angeordnet ist, die eine Richtung einer Seite an Seite liegenden Anordnung der Turbinenunterbringungseinheit (111) und der hoch erdbebensicheren Einheit (112) kreuzt.

10. Kernkraftwerk nach Anspruch 9, wobei die zugehörigen Komponenten (47, 49) auf den Böden (123) mehrerer Stockwerke der hoch erdbebensicheren Einheit (112) angeordnet sind.

11. Kernkraftwerk nach Anspruch 10, wobei der Entgaser (47) und der Hochdruck-Speisewassererhitzer (49) vertikal in der hoch erdbebensicheren Einheit (112) angeordnet sind.

## Revendications

1. Centrale nucléaire comprenant un bâtiment de turbine et un bâtiment de réacteur (101) qui loge un réacteur nucléaire, le bâtiment de turbine comprenant :
une unité d'hébergement de turbine (111) qui loge une turbine à vapeur (119) ; et
une unité hautement parasismique (112) adjacente à l'unité d'hébergement de turbine (111), l'unité hautement parasismique (112) étant conçue pour avoir un niveau de résistance aux tremblements de terre plus élevé que l'unité d'hébergement de turbine (111), dans laquelle
l'unité d'hébergement de turbine (111) et l'unité hautement parasismique (112) ont des espaces internes qui communiquent entre eux, chacune de l'unité d'hébergement de turbine (111) et l'unité hautement parasismique (112) ayant une structure indépendante, et
l'unité hautement parasismique (112) est éloignée du bâtiment de réacteur (101) d'une certaine distance, **caractérisée en ce que**
l'unité hautement parasismique (112) loge un désaérateur (47) et un réchauffeur d'eau d'alimentation haute pression (49).

2. Centrale nucléaire selon la revendication 1, dans laquelle l'unité d'hébergement de turbine (111) et l'unité hautement parasismique (112) sont construites sur des fondations indépendantes respectives (121, 131).

3. Centrale nucléaire selon la revendication 2, dans laquelle la fondation (121) de l'unité d'hébergement de turbine (111) est en contact avec la fondation (131) de l'unité hautement parasismique (112), dans laquelle l'unité d'hébergement de turbine (111) et l'unité hautement parasismique (112) sont espacées avec un intervalle entre les structures de l'unité d'hébergement de turbine (111) et de l'unité hautement parasismique (112).

4. Centrale nucléaire selon la revendication 3, dans laquelle un élément tampon (141) est disposé dans l'intervalle entre les structures de l'unité d'hébergement de turbine (111) et de l'unité hautement parasismique (112).

5. Centrale nucléaire selon la revendication 4, dans laquelle l'élément tampon (141) est interposé entre un plancher (123) de l'unité d'hébergement de turbine (111) et un plancher (133) de l'unité hautement parasismique (112) pour relier les étages de manière contiguë.

6. Centrale nucléaire selon la revendication 3, dans laquelle l'intervalle entre les structures de l'unité d'hébergement de turbine (111) et de l'unité hautement parasismique (112) est recouvert d'un recouvrement (142).

7. Centrale nucléaire selon l'une quelconque des revendications 1 à 6, dans laquelle l'unité hautement parasismique (112) a une hauteur inférieure à une hauteur de l'unité d'hébergement de turbine.

8. Centrale nucléaire selon l'une quelconque des revendications 1 à 7, dans laquelle l'unité hautement parasismique (112) loge un composant associé (47 ; 49) pour la turbine à vapeur (19).

9. Centrale nucléaire selon la revendication 8, dans laquelle le composant associé (47 ; 49) est disposé le long d'une direction horizontale recoupant une direction d'un agencement côte à côte de l'unité d'hébergement de turbine (111) et de l'unité hautement parasismique (112).

10. Centrale nucléaire selon la revendication 9, dans laquelle des composants associés (47, 49) sont disposés sur des planchers (123) à plusieurs étages de l'unité hautement parasismique (112).

11. Centrale nucléaire selon la revendication 10, dans laquelle le désaérateur (47) et le réchauffeur d'eau d'alimentation haute pression (49) sont disposés verticalement dans l'unité hautement parasismique (112).
